Europäisches Patentamt

European Patent Office

Office européen des brevets

(19)

(11) Veröffentlichungsnummer: **0 225 436**
**B1**

(12) EUROPÄISCHE PATENTSCHRIFT

(45) Veröffentlichungstag der Patentschrift:
12.04.89

(51) Int. Cl.⁴: **B60K 23/04**, B60K 28/16

(21) Anmeldenummer: **86112205.9**

(22) Anmeldetag: **03.09.86**

(54) **Betätigungseinrichtung für eine Differentialsperre.**

(30) Priorität: **12.12.85 DE 3543894**

(43) Veröffentlichungstag der Anmeldung:
**16.06.87 Patentblatt 87/25**

(45) Bekanntmachung des Hinweises auf die Patenterteilung:
**12.04.89 Patentblatt 89/15**

(84) Benannte Vertragsstaaten:
**DE FR GB SE**

(56) Entgegenhaltungen:
**FR-A- 1 318 548**
**US-A- 3 871 249**

(73) Patentinhaber: **WABCO Westinghouse Fahrzeugbremsen GmbH, Am Lindener Hafen 21 Postfach 91 12 80, D-3000 Hannover 91(DE)**

(72) Erfinder: **Deike, Horst, Peiner Landstrasse 5, D-3161 Clauen(DE)**
Erfinder: **Petersen, Erwin, Dr.-Ing., Fliederweg 22, D-3051 Wunstorf(DE)**

(74) Vertreter: **Schrödter, Manfred, WABCO Westinghouse Fahrzeugbremsen GmbH Am Lindener Hafen 21 Postfach 91 12 80, D-3000 Hannover 91(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Betätigungseinrichtung für eine Differentialsperre, mittels der wenigstens zwei an sich voneinander unabhängig drehbare angetriebene Räder eines Fahrzeugs drehfest verbindbar sind, gemäss dem Oberbegriff des Patentanspruchs 1.

Eine solche Betätigungseinrichtung dient in der Fahrzeugtechnik in Verbindung mit der Differentialsperre zur Verbesserung der Vortriebseigenschaften, wenn wenigstens ein angetriebenes Rad durchdreht.

Eine solche Betätigungseinrichtung darf zur Vermeidung einer Gefährdung von Bauteilen der häufig formschlüssigen Differentialsperre und/oder des Antriebsstranges nur betätigt werden, solange kein angetriebenes Rad durchdreht. Zu diesem Zweck besteht üblicherweise die Vorschrift, dass die Differentialsperre nur betätigt werden darf, wenn entweder das Fahrzeug stillsteht oder der Fahrfusshebel (Gaspedal) oder der Antriebskraftfluss bis zur Wiederherstellung des Gleichlaufes der Antriebsräder unbetätigt bzw. unterbrochen war. In der Praxis bereitet die Beachtung dieser Vorschrift Schwierigkeiten, weil sie in schwierigen Verkehrssituationen den Fahrer überfordert und weil vom Fahrersitz aus, d. h. ohne Sicht auf die Räder, der Zeitpunkt der Wiederherstellung des Gleichlaufes kaum erkennbar ist. Es kommt daher infolge Fehlbedienungen des öfteren zu schwerwiegenden Beschädigungen von Bauteilen der Differentialsperre und/oder des Antriebsstranges, insbesondere der Antriebswellen.

Aus der FR-A 1 318 548 ist eine Betätigungseinrichtung für eine Differentialsperre mit einer in Einrückrichtung der Differentialsperre druckbeaufschlagbaren Stelleinrichtung beschrieben, die kein willkürlich betätigbares Betätigungsorgan aufweist. Diese Betätigungseinrichtung weist eine erste Einrichtung auf, die ein Schlupfsignal abgibt, wenn wenigstens ein angetriebenes Rad durchdreht. Diese Betätigungseinrichtung weist auch eine zweite Einrichtung auf, welche die Verbindung der Stelleinrichtung mit einer Druckmittelquelle kontrolliert. In diesem Fall verbindet die zweite Einrichtung die Stelleinrichtung mit der Druckmittelquelle, solange das Schlupfsignal ansteht. Die bekannte Betätigungseinrichtung bewirkt also abhängig vom Schlupfsignal ein automatisches Einrücken der Differentialsperre. Eine solche Betätigungseinrichtung kann ohne Gefährdung von Bauteilen nur für bestimmte Arten Differentialsperren eingesetzt werden. Folgerichtig zeigt dieser Stand der Technik eine Differentialsperre in Sonderbauart in Form einer Mehrscheiben-Reibungskupplung.

Der Erfindung liegt die Aufgabe zugrunde, eine Betätigungseinrichtung der eingangs erwähnten Art mit einfachen Mitteln so zu verbessern, daß Fehlbedienungen derselben nicht zu Beschädigungen an Bauteilen der Differentialsperre und/oder des Antriebsstranges führen können.

Diese Aufgabe wird durch die im Patentanspruch 1 angegebene Erfindung gelöst. Weiterbildungen und vorteilhafte Ausgestaltungen sind in den Unteransprüchen angegeben.

Durch die Erfindung wird die eingangs genannte Betätigungseinrichtung für die Dauer des Schlupfsignals in Einrückrichtung der Differentialsperre blockiert; das Betätigungsorgan bewirkt also bei Betätigung innerhalb dieses Zeitraums nur eine Vorwahl.

In einer vorteilhaften Ausgestaltung wird die zum erwähnten Blockieren dienende zweite Einrichtung durch eine dritte Einrichtung unabhängig von dem Schlupfsignal bis zum Lösen der Differentialsperre ausser Funktion gesetzt. Diese Ausgestaltung ist insbesondere bei selbstlösender Ausbildung der Stelleinrichtung vorteilhaft, um die Differentialsperre nach dem Einrücken bis zur Rückbetätigung des Betätigungsorganes auch bei erneut auftretendem Schlupfsignal eingerückt zu halten.

Das Schlupfsignal wird von der ersten Einrichtung gebildet, wenn wenigstens eines der angetriebenen Räder sich mit Schlupf gegenüber der Fahrbahnoberfläche dreht und/oder wenn die angetriebenen Räder sich mit unterschiedlichen Drehzahlen drehen. Die erste Einrichtung kann auch so ausgebildet sein, dass sie das Schlupfsignal erst bildet, wenn der erwähnte Schlupf bzw. der erwähnte Drehzahlunterschied einen vorbestimmten Wert überschreitet. Auch eine Kombination der vorstehend erwähnten Ausgestaltungen ist möglich.

Als Referenzinformationen zur Erkennung des erwähnten Schlupfes gegenüber der Fahrbahnoberfläche können eine der Fahrgeschwindigkeit entsprechende Soll-Raddrehzahl oder die Drehzahl wenigstens eines nicht angetriebenen Rades dienen.

Die Erfindung lässt sich mit jeder bekannten Art Betätigungsorgan, welches sich zum Steuern einer Druckmittelverbindung eignet, ausführen, wobei das Betätigungsorgan auch auf jede bekannte Weise, beispielsweise manuell, über Druckmittel oder über einen Stromkreis elektrisch, z. B. mittels eines Stellmagneten und eines Handschalters, betätigbar sein kann.

In einer Ausgestaltung ist die zweite Einrichtung druckmittelseitig in Reihe mit dem Betätigungsorgan angeordnet und als magnetbetätigtes Wegeventil in der Verbindung zwischen Druckmittelquelle und Stelleinrichtung in Einrückrichtung ausgebildet, dessen Magnet bei anstehendem Schlupfsignal aktivierbar ist. Dieses Wegeventil ist in Ruhestellung durchgängig und nimmt bei aktiviertem Magneten eine Sperrstellung ein, in der es undurchgängig ist. Das Wegeventil kann zusätzlich so ausgebildet sein, daß sein Ausgang in der Sperrstellung druckentlastet ist.

Im Falle des mit elektrischer Betätigung ausgestatteten Betätigungsorgans kann die zweite Einrichtung als elektrisch gesteuerte Schalteinrichtung ausgebildet sein, die wenigstens bei anstehendem Schlupfsignal aktivierbar ist und in aktiviertem Zustand den Stromkreis des Betätigungsorgans auftrennt. Eine solche Schalteinrichtung läßt sich mit handelsüblichen Bauteilen, beispielsweise durch ein Relais mit Ruhestromkontakt, darstellen.

Die dritte Einrichtung kann beispielsweise als zusätzliche druckmittelbetätigte Steuereinrichtung auf die zweite Einrichtung einwirken. In einer kostengünstigen Ausgestaltung ist die dritte Einrichtung elektrisch ausgebildet, derart, daß sie mit einer Schalteinrichtung den Erregerkreis des Magneten des erwähnten Wegeventils bzw. den Steuerkreis der erwähnten Schalteinrichtung kontrolliert und den betreffenden Kreis auftrennt, wenn die Differentialsperre eingedrückt ist.

In vorteilhaft kostengünstiger Ausgestaltung kann die dritte Einrichtung zur Steuerung der erwähnten Schalteinrichtung einen Meßfühler aufweisen, der die Einrückstellung der Stelleinrichtung überwacht und die Schalteinrichtung steuert.

In weiterer vorteilhafter Ausgestaltung kann die als dritte Einrichtung dienende Schalteinrichtung als Relais mit Ruhestromkontakt ausgebildet sein, dessen Stromkreis von dem Meßfühler geschlossen wird, wenn die Stelleinrichtung ihre Einrückstellung erreicht.

In dem oben erwähnten Fall daß das Betätigungsorgan elektrisch betätigbar ist und die zweite Einrichtung als Schalteinrichtung, beispielsweise als Relais mit Ruhestromkontakt, ausgebildet ist, kann die dritte Einrichtung mit wenig Aufwand als Stellungssensor realisiert werden, der die Einrückstellung der Stelleinrichtung überwacht und die als zweite Einrichtung dienende Schalteinrichtung außer Funktion setzt, wenn die Stelleinrichtung in Einrückstellung ist.

Die Stelleinrichtung kann doppeltwirkend, d.h. auch in Löserichtung der Differentialsperre druckmittelbetätigt, oder einfachwirkend, d. h. selbstlösend, z.B. durch Federrückstellung, ausgebildet sein. Im erstgenannten Fall ist das Betätigungsorgan vorteilhaft so ausgebildet, daß es auch die Verbindung der Stelleinrichtung in Löserichtung mit der Druckmittelquelle steuert. Auch getrennte Betätigungsorgane für Einrücken und Lösen sind möglich, müßten jedoch eine gleichzeitige Betätigung ausschließend verknüpft sein.

Vorteilhaft läßt sich die Erfindung in einem Fahrzeug einsetzen, das mit einer Antriebsschlupf-Regeleinrichtung ausgerüstet ist. Eine solche kann beispielsweise auf den Antriebsmotor, insbesondere dessen Drehzahlsteuereinrichtung, einwirken. Dieser Fall ist insofern besonders vorteilhaft, als das für die Erfindung erforderliche Schlupfsignal ohne jeglichen Mehraufwand zur Verfügung steht und eine Kombinationsanlage geschaffen wird, die Einrichtungen zum Schutz der Differentialsperre und zur Herstellung des Gleichlaufes der Räder bzw. zur Beseitigung von Schlupf gegenüber der Fahrbahnoberfläche in sich vereinigt.

Die erwähnte elektrische Betätigung des Betätigungsorgans und/oder die zweite Einrichtung und/oder die dritte Einrichtung können auch aus diskret oder teilweise oder vollständig integriert angeordneten elektronischen Logik- bzw. Schaltelementen bestehen, die gegebenenfalls vollständig oder teilweise mit der Antriebsschlupf-Regeleinrichtung und/oder anderen elektrischen/elektronischen Komponenten am Fahrzeug elektrisch und/oder baulich vereinigt sein können.

Die Erfindung wird nachstehend anhand von in Zeichnungen dargestellten Ausführungsbeispielen erläutert.

Es zeigen:

Fig. 1 schematisch eine Betätigungseinrichtung für eine Differentialsperre mit einer ersten Ausgestaltung von Betätigungsorgan und zweiter Einrichtung,

Fig. 2 die Betätigungseinrichtung nach Fig. 1 mit einer zweiten Ausgestaltung von Betätigungsorgan und zweiter Einrichtung,

Fig. 3 ausschnittsweise eine andere Ausgestaltung der Betätigungseinrichtung nach Fig. 2.

In den Figuren stehen durchgehend für funktionsgleiche Positionen gleiche Bezugszeichen, durchgezogene Verbindungslinien für Druckmittelverbindungen und strichpunktierte Verbindungslinien für elektrische Verbindungen.

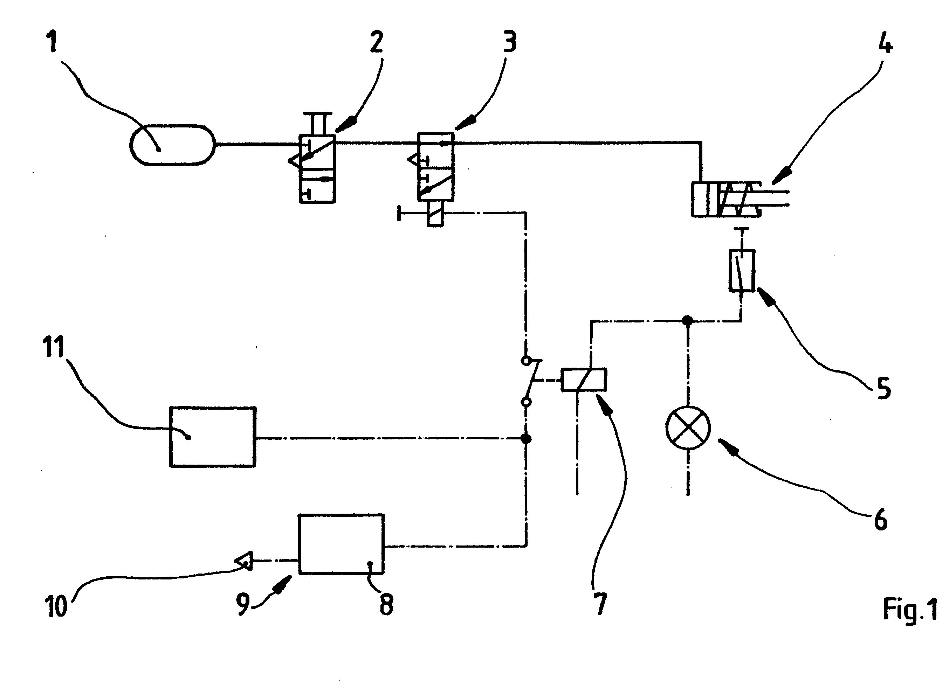

Fig. 1 zeigt schematisch eine pneumatische Betätigungseinrichtung für eine Differentialsperre mit einer als Sperrzylinder ausgebildeten Stelleinrichtung 4 und einem als Betätigungsorgan dienenden 3/2-Wegeventil 2.

Die Stelleinrichtung 4 wird in Einrückrichtung der Differentialsperre durch Beaufschlagung mit Druckmittel aus einer Druckmittelquelle 1 bewegt und ist in Löserichtung der Differentialsperre durch eine Feder vorgespannt, durch welche sie bei Druckentlastung in Löserichtung rückgestellt wird. Das als Betätigungsorgan dienende 3/2-Wegeventil 2 ist in der Druckmittelverbindung zwischen Druckmittelquelle 1 und Stelleinrichtung 4 angeordnet. Es ist vom Fahrer in eine Durchgangsstellung und in eine Sperrstellung stellbar, in welch letzterer es den Durchflussweg von seinem Einlass zu seinem Auslass sperrt und seinen Auslass druckentlastet.

Das 3/2-Wegeventil 2 wird, wie dargestellt, manuell betätigt, kann aber auch auf anderem Wege, z.B. durch Druckmittel oder elektrisch, betätigt werden.

Mit 9 ist eine erste Einrichtung bezeichnet, die den Schlupf wenigstens eines angetriebenen Rades, nachstehend Antriebsrad, überwacht und ein Schlupfsignal abgibt, wenn das Antriebsrad durchdreht. Das Schlupfsignal erzeugt die erste Einrichtung 9 mittels einer Sensoreinrichtung 10 und einer Elektronik 8, wobei die Sensoreinrichtung 10 drehzahlabhängige Signale des auf Schlupf überwachten Antriebsrades und Referenzsignale eines anderen Rades oder Antriebsrades oder der Fahrzeuggeschwindigkeit gewinnt und die Elektronik 8 diese Signale logisch miteinander verknüpft.

In Reihe mit dem 3/2-Wegeventil 2 ist in der genannten Druckmittelverbindung ein magnetbetätigtes 3/2-Wegeventil 3 angeordnet, welches eine zweite Einrichtung darstellt, mittels der bei anstehendem Schlupfsignal die Verbindung der Stelleinrichtung 4 in der Einrückrichtung der Differentialsperre mit der Druckluftquelle 1 absperrbar ist. Das 3/2-Wegeventil 3 nimmt bei nicht aktiviertem Magneten eine Durchgangsstellung und bei aktiviertem Magneten eine Sperrstellung ein, in welch letzterer es seinen Durchflußweg zwischen Einlaß und Auslaß sperrt und den Auslaß druckentlastet.

Dargestellt ist das 3/2-Wegeventil 3 in der genannten Druckmittelverbindung stromabwärts des 3/2-Wegeventils 2. Das 3/2-Wegeventil 3 ist also einlaßseitig mit dem Auslaß des 3/2-Wegeventils 2 und auslaßseitig mit der Stelleinrichtung 4 verbunden. Das 3/2-Wegeventil 3 kann aber auch stromaufwärts des 3/2-Wegeventils 2 angeordnet sein, ohne daß dadurch die weiter unten beschriebene Funktion der Betätigungseinrichtung berührt würde. In diesem Fall wären das 3/2-Wegeventil 3 einlaßseitig mit der Druckmittelquelle 1 und auslaßseitig mit dem Einlaß des 3/2-Wegeventils 2 und letzteres auslaßseitig mit der Stelleinrichtung 4 verbunden.

In nicht näher dargestellter Weise enthält die Elektronik 8 der ersten Einrichtung 9 auch eine Leistungsstufe, an der der Erregerkreis des Magneten des 3/2-Wegeventils 3 angeschlossen ist und die diesen Erregerkreis bei anstehendem Schlupfsignal an eine nicht dargestellte Stromquelle anschließt.

Im Ausführungsbeispiel ist parallel zu dem Erregerkreis des Magneten des 3/2-Wegeventils 3 eine durch 11 symbolisierte Gleichlaufeinrichtung an die Leistungsstufe der Elektronik 8 angeschlossen, mittels welcher bei anstehendem Schlupfsignal Maßnahmen zur Herstellung des Gleichlaufs der Räder bzw. zur Beseitigung des festgestellten Schlupfes, beispielsweise eine Verstellung des Antriebsmotors, gesteuert werden. Die erste Einrichtung 9 ist daher Bestandteil einer Antriebsschlupf-Regeleinrichtung, die in nicht näher beschriebener Weise mit weiteren Einrichtungen, z.B. mit einer Blockierschutzanlage, vereinigt sein kann.

Es liegt auf der Hand, daß vorstehende Ausführungen zur ersten Einrichtung 9 entsprechend gelten, wenn diese den Schlupf mehrerer oder aller Antriebsräder überwacht. Eine solche Ausführung liegt beispielsweise vor, wenn die erwähnten Referenzsignale von einem oder mehreren anderen Antriebsrädern gewonnen werden.

Im Erregerkreis des Magneten des 3/2-Wegeventils 3 ist der Kontakt einer als Relais mit Ruhestromkontakt ausgebildeten Schalteinrichtung 7 angeordnet. Die Wicklung dieses Relais liegt in einem Stromkreis, der von einem Meßfühler 5 geschlossen wird, wenn die Stelleinrichtung 4 sich in Einrückstellung befindet und damit die Differentialsperre eingerückt ist. Die Schalteinrichtung 7 und der Meßfühler 5 bilden, wie aus der unten folgenden Funktionsbeschreibung hervorgeht, eine dritte Einrichtung, welche die Absperrfunktion der zweiten Einrichtung unabhängig von dem Schlupfsignal außer Kraft setzt, wenn die Differentialsperre eingerückt ist.

Mit 6 ist eine Anzeigeeinrichtung bezeichnet, deren Stromkreis bei eingerückter Differentialsperre ebenfalls von dem Meßfühler 5 geschlossen wird und die dadurch den eingerückten Zustand der Differentialsperre anzeigt.

In normalem Fahrbetrieb befindet sich die vorstehend beschriebene Betätigungseinrichtung in der dargestellten Grundstellung. In diesem Zustand sind

- die Differentialsperre gelöst, d. h. die Stelleinrichtung 4 in der Einrückrichtung druckentlastet,
- das 3/2-Wegeventil 2 in Sperrstellung,
- der Stromkreis der Wicklung der Schalteinrichtung 7 offen und damit deren Ruhestromkontakt geschlossen,
- kein Schlupfsignal vorhanden,
- der Magnet des 3/2-Wegeventils 3 nicht aktiviert und dadurch dieses in Durchgangsstellung.

Gibt jetzt die erste Einrichtung 9 ein Schlupfsignal ab, so wird der Magnet des 3/2-Wegeventils 3 aktiviert und dieses in Sperrstellung gestellt. Auswirkungen auf die Stelleinrichtung 4 und damit die Differentialsperre hat dieser Vorgang nicht.

Beabsichtigt der Fahrer, die Differentialsperre einzurücken, stellt er das als Betätigungsorgan dienende 3/2-Wegeventil 2 aus seiner Sperrstellung in seine Durchgangsstellung um. Steht jetzt kein Schlupfsignal an, so wird durch die erwähnte Umstellung durch das in Durchgangsstellung befindliche 3/2-Wegeventil 3 hindurch die Stelleinrichtung 4 in Einrückrichtung mit Druckmittel aus dem Druckmittelvorrat 1 beaufschlagt und die Differentialsperre eingerückt. Steht jedoch im Augenblick des Umstellens des 3/2-Wegeventils 2 ein Schlupfsignal an, so wird durch die erwähnte Umstellung eine Verbindung zwischen Druckmittelquelle 1 und Stelleinrichtung 4 nicht hergestellt, da das in Sperrstellung befindliche 3/2-Wegeventil 3 diese verhindert. Erst wenn das Schlupfsignal verschwindet, wird durch die dann erfolgende Rückstellung des 3/2-Wegeventils 3 in seine Durchgangsstellung die erwähnte Verbindung zwischen Druckmittelquelle 1 und Stelleinrichtung 4 hergestellt. Bei anstehendem Schlupfsignal ist also mittels des als Betätigungsorgan dienenden 3/2-Wegeventils 2 nur eine Vorwahl der Differentialsperrbetätigung möglich. Damit sichert die beschriebene Betätigungseinrichtung die Differentialsperre gegen Einrücken bei anstehendem Schlupfsignal, also beim Durchdrehen wenigstens eines Antriebsrades, und schützt damit die Bauteile der Differentialsperre und/oder des Antriebsstranges gegen Beschädigung.

Hat die Stelleinrichtung 4 ihre Einrückstellung erreicht, so sichert die aus der Schalteinrichtung 7 und dem Meßfühler 5 bestehende dritte Einrichtung die Differentialsperre gegen unbeabsichtigtes Lösen bei erneut auftretendem Schlupfsignal. Letzterer Fall kann beispielsweise bei einem Fahrzeug mit mehreren Antriebsachsen mit jeweils eigener Differentialsperre und zugeordneter Betätigungseinrichtung, aber für alle Betätigungseinrichtungen zusammengefaßter Schlupfsignalausgabe, beispielsweise durch Zentralelektronik, dann auftreten, wenn nur ein Teil der Differentialsperren (genauer: deren Betätigungsorgane) betätigt ist.

In Einrückstellung der Stelleinrichtung 4 schließt der Meßfühler 5 den Stromkreis der Wicklung der Schalteinrichtung 7. Dadurch wird der Ruhestromkontakt der Schalteinrichtung 7 und damit der Erregerkreis des Magneten des 3/2-Wegeventils 3 geöffnet mit dem Ergebnis, daß, solange die Stelleinrichtung 4 sich in Einrückstellung befindet, ein Schlupfsignal das 3/2-Wegeventil 3 nicht aus seiner Durchgangsstellung umstellen kann.

Ein Lösen der Differentialsperre ist durch Rückstellung des als Betätigungsorgan dienenden 3/2-Wegeventils 2 aus seiner Durchgangsstellung in seine Sperrstellung möglich. Dadurch wird die Stelleinrichtung 4 in Einrückrichtung druckentlastet und durch die Rückstellfeder unter Lösen der Differentialsperre in Löserichtung bewegt. Im Ausführungsbeispiel öffnet dabei der Meßfühler 5 den Stromkreis der Wicklung der Schalteinrichtung 7, wodurch der Ruhestromkontakt und damit der Erregerkreis des Magneten des 3/2-Wegeventils 3 geschlossen wird mit dem Ergebnis, daß die weiter oben beschriebene Grundstellung wieder hergestellt wird.

Die zweite Einrichtung kann auch als 2/2-Wegeventil, dessen Auslaß in Sperrstellung nicht druckentlastet ist, ausgebildet sein. Diese Ausgestaltung hat den Vorteil, daß die Sicherungsfunktion, die im Ausführungsbeispiel mit der dritten Einrichtung (Schalteinrichtung 7 und Meßfühler 5) erreicht wird, auch ohne diese gewährleistet ist. Diese Ausgestaltung bietet damit eine besonders kostengünstige Lösung der Erfindung.

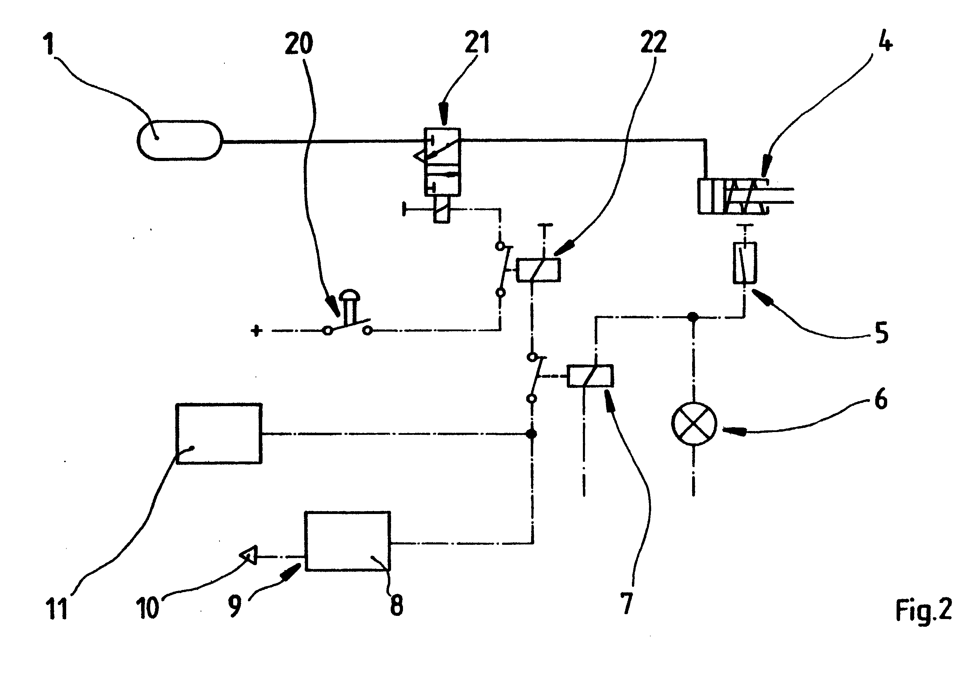

Das in Fig. 2 dargestellte Ausführungsbeispiel weicht in der Ausbildung des Betätigungsorgans und der zweiten Einrichtung von dem vorherigen Ausführungsbeispiel ab und ist diesem im übrigen gleich.

Das Betätigungsorgan ist in diesem Fall über einen Stromkreis elektrisch betätigbar und als magnetbetätigtes 3/2-Wegeventil 21 ausgebildet, welches die gleichen Stellungen wie das Betätigungsorgan des vorherigen Ausführungsbeispiels aufweist und durch Aktivierung seines Magneten in die Durchgangsstellung stellbar ist.

Die zweite Einrichtung wird in diesem Fall von einer als Relaisventil mit Ruhestromkontakt ausgebildeten Schalteinrichtung 22 gebildet.

Im Stromkreis des Magneten des 3/2-Wegeventils 21 sind der Kontakt eines hand- oder fußbetätigbaren Schalters 20 und der Ruhestromkontakt des Relais der Schalteinrichtung 22 angeordnet. Die Wicklung dieses Relais liegt in einem Steuerkreis, der an die Leistungsstufe der Elektronik 8 angeschlossen ist. In dem Steuerkreis liegt der Ruhestromkontakt des die Schalteinrichtung 7 bildenden Relais.

In der Grundstellung dieses Ausführungsbeispieles sind
– die Differantialsperre gelöst, d. h. die Stelleinrichtung 4 in der Einrückrichtung druckentlastet,
– der Stromkreis der Wicklung der Schalteinrichtung 7 offen und damit deren Ruhestromkontakt geschlossen,
– kein Schlupfsignal vorhanden, dadurch die Schalteinrichtung 22 nicht aktiviert und der Ruhestromkontakt ihres Relais geschlossen,
– der Schalter 20 unbetätigt und dadurch sein Kontakt geöffnet,
– der Magnet des 3/2-Wegeventils 21 nicht aktiviert und dieses Ventil dadurch in Sperrstellung.

Gibt jetzt die erste Einrichtung 9 ein Schlupfsignal ab, so wird die Schalteinrichtung 22 aktiviert und trennt den Stromkreis des Magneten des 3/2-Wegeventils 21 auf, ohne daß dieser Vorgang Auswirkungen auf die Stelleinrichtung 4 und damit die Differentialsperre hätte.

Beabsichtigt der Fahrer, die Differentialsperre einzurücken, betätigt er den Schalter 20 und schließt damit dessen Kontakt. Steht jetzt ein Schlupfsignal nicht an, ist also der Ruhestromkontakt des Relais der Schalteinrichtung 22 geschlossen, so wird durch die Betätigung des Schalters 20 der Magnet des 3/2-Wegeventils 21 aktiviert und dadurch dieses in seine Durchgangsstellung gestellt mit der Folge, daß die Verbindung zwischen der Durckmittelquelle 1 und der Stelleinrichtung 4 in Einrückrichtung geöffnet wird. Steht jedoch im Augenblick der Betätigung des Schalters 20 ein Schlupfsignal an, ist der Ruhestromkontakt des die Schalteinrichtung 22 bildenden Relais geöffnet, so daß die Betätigung des Schalters 20 eine Aktivierung des Magneten des 3/2-Wegeventils 21 nicht hervorrufen kann. Erst wenn das Schlupfsignal verschwindet, wird durch die dann erfolgende Rückstellung des genannten Ruhestromkontaktes der Stromkreis des Magneten des 3/2-Wegeventils 21 geschlossen, der Magnet aktiviert und dadurch die Druckmittelverbindung zwischen Druckmittelquelle 1 und Stelleinrichtung 4 in Einrückrichtung hergestellt. Auch bei diesem Ausführungsbeispiel ist also mittels des als elektrisch betätigbares Betätigungsorgan dienenden 3/2-Wegeventils 21 bei anstehendem Schlupfsignal nur eine Vorwahl der Differentialsperrbetätigung möglich.

Die als zweite Einrichtung dienende Schalteinrichtung 22 stellt aufgrund der geschilderten Funktion eine elektrisch gesteuerte Schalteinrichtung dar, die wenigstens bei anstehendem Schlupfsignal aktivierbar ist (nämlich wenn die Schalteinrichtung 7 nicht aktiviert und der Handschalter 20 betätigt sind) ist und in aktiviertem Zustand den Stromkreis des Betätigungsorgans auftrennt.

Zum Lösen der Differentialsperre wird der Schalter 20 rückbetätigt, dadurch sein Kontakt geöffnet mit der Folge, daß der Magnet des 3/2-Wegeventils 21 deaktiviert und das Ventil aus seiner Durchgangsstellung in seine Sperrstellung rückgestellt und dadurch die Stelleinrichtung 4 in Einrückrichtung druckentlastet werden. Mit Rückkehr der Stelleinrichtung 4 in ihre Grundstellung befindet sich dann die gesamte Betätigungseinrichtung wieder in Grundstellung.

Im übrigen gelten die zum Ausführungsbeispiel nach Fig. 1 gemachten Ausführungen in entsprechender Weise, wobei an die Stelle des dort vorhandenen Erregerkreises des Magneten des 3/2-Wegeventils 3 der Steuerkreis der Schalteinrichtung 22 tritt.

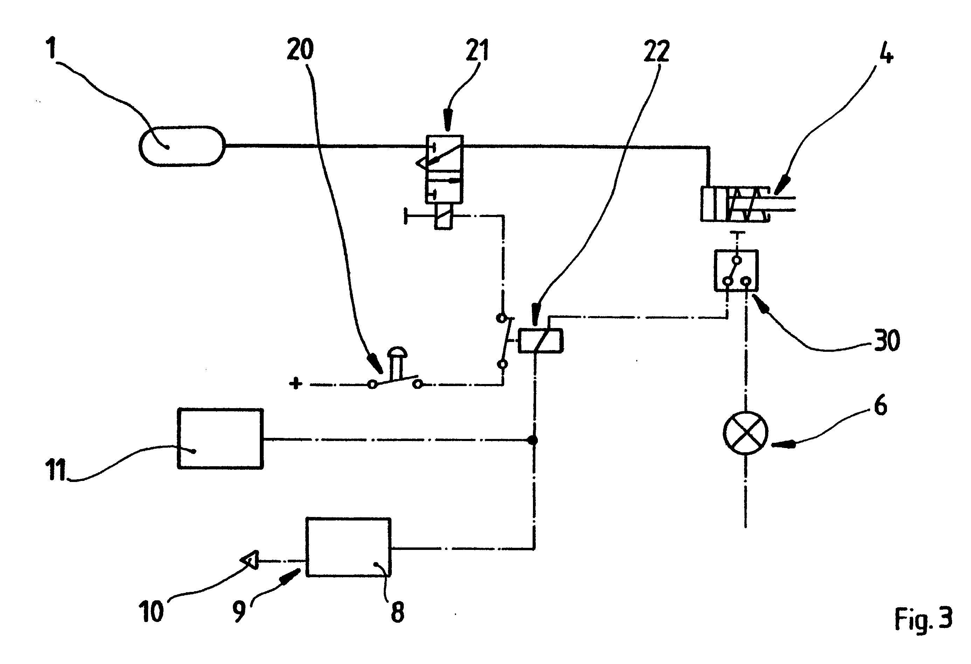

Fig. 3 stellt eine Ausgestaltung des Ausführungsbeispieles nach Fig. 2 dar, in der die dort dargestellte dritte Einrichtung 5, 7 durch eine vereinfachte Ausbildung ersetzt ist.

Als dritte Einrichtung zeigt Fig. 3 einen Stellungssensor 30, der die Aktivierung der Schalteinrichtung 22 verhindert, wenn die Stelleinrichtung 4 in Einrückstellung ist. Im Sinne dieser Funktion muß der Stellungssensor 30 die Einrückstellung der Stelleinrichtung 4 überwachen.

Wie in Fig. 3 durch den im Steuerkreis der Schalteinrichtung 22 angeordneten Kontakt angedeutet ist, schließt der Stellungssensor 30 diesen Steuerkreis, so lange die Stelleinrichtung 4 nicht in Einrückstellung ist und öffnet diesen Steuerkreis, wenn die Stelleinrichtung 4 in Einrückstellung gelangt. Dadurch verhindert der Stellungssensor 30, daß ein bei eingerückter Differentialsperre auftretendes Schlupfsignal die als zweite Einrichtung dienende Schalteinrichtung 22 aktiviert und dadurch zum Lösen der Differentialsperre führt.

Aufgrund der beschriebenen Wirkungsweise übernimmt der Stellungssensor 30 die der dritten Einrichtung obliegende Aufgabe, die Absperrfunktion der zweiten Einrichtung unabhängig von dem Schlupfsignal außer Funktion zu setzen, wenn die Differentialsperre eingerückt ist.

Wie dargestellt, kann der Stellungssensor 30 mit einem Wechselkontakt ausgerüstet sein, der bei eingerückter Differentialsperre den Stromkreis der Anzeigelampe 6 schließt.

Im übrigen gelten für die Ausführungsbeispiele 2 und 3 die zum Ausführungsbeispiel nach Fig. 1 gemachten Ausführungen in entsprechender Weise.

Es liegt auf der Hand, daß durch die vorstehenden Ausführungen der Anwendungsbereich der Erfindung nicht erschöpfend beschrieben ist.

Beispielsweise können in nicht dargestellter Weise die Funktionen des Schalters 20 und/oder der zweiten Einrichtung und/oder der dritten Einrichtung mit diskret oder teilweise oder vollständig integriert angeordneten elektronischen Logik- bzw. Schaltelementen realisiert werden, welche vollständig oder teilweise mit der Antriebsschlupf-Regeleinrichtung und/oder anderen elektrischen/elektronischen Komponenten am Fahrzeug elektrisch und/oder baulich vereinigt sein können.

Auch kann die Betätigungseinrichtung statt pneumatisch durch andere gasförmige oder flüssige Druckmittel betätigbar sein.

Auch kann die Stelleinrichtung doppeltwirkend ausgebildet, d.h. sowohl in Einrückrichtung als auch in Löserichtung druckmittelbetätigbar, sein. In diesem Fall kann die von der Schalteinrichtung 7 und dem Meßfühler 5 gebildete dritte Einrichtung entfallen und müßte in für den Fachmann ersichtlicher Weise das Betätigungsorgan auch die Druckmittelverbindung zwischen Stelleinrichtung in Löserichtung und der Druckmittelquelle oder einer eigenen Druckmittelquelle kontrollierend, beispielsweise als 5/2-Wegeventil, ausgebildet sein oder auf beide Druckmittelverbindungen aufgeteilte Organe, die dann entsprechend verknüpft sein müßten, aufweisen.

## Patentansprüche

1. Betätigungseinrichtung für eine Differentialsperre, mittels der wenigstens zwei an sich voneinander unabhängig drehbare angetriebene Räder eines Fahrzeugs drehfest verbindbar sind, mit einer wenigstens in Einrückrichtung der Differentialsperre druckbeaufschlagbaren Stelleinrichtung (4) und einem deren Verbindung in der Einrückrichtung mit einer Druckmittelquelle (1) steuernden, willkürlich betätigbaren, Betätigungsorgan (2, 21), gekennzeichnet durch die Merkmale:

a) Es ist eine den Schlupf wenigstens eines der angetriebenen Räder überwachende erste Einrichtung (9) vorgesehen, die ein Schlupfsignal abgibt, wenn das wenigstens eine Antriebsrad durchdreht;

b) es ist eine zweite Einrichtung (3, 22) vorgesehen, mittels der bei anstehendem Schlupfsignal die Verbindung der Stelleinrichtung (4) in der Einrückrichtung mit der Druckmittelquelle (1) absperrbar ist.

2. Betätigungseinrichtung nach Anspruch 1, dadurch gekennzeichnet, daß eine dritte Einrichtung (5, 7; 30) vorgesehen ist, welche die Absperrfunktion der zweiten Einrichtung (3, 22) unabhängig von dem Schlupfsignal außer Funktion setzt, wenn die Differentialsperre eingerückt ist.

3. Betätigungseinrichtung nach einem der Patentansprüche 1 oder 2, dadurch gekennzeichnet, daß die zweite Einrichtung (3) als druckmittelseitig in Reihe mit dem Betätigungsorgan (2) angeordnetes magnetbetätigtes Wegeventil (3) ausgebildet ist, dessen Magnet bei anstehendem Schlupfsignal aktivierbar ist.

4. Betätigungseinrichtung nach einem der Ansprüche 1 oder 2, wobei das Betätigungsorgan (21) über einen Stromkreis elektrisch betätigbar ist, dadurch gekennzeichnet, daß die zweite Einrichtung (22) als elektrisch gesteuerte Schalteinrichtung (22) ausgebildet ist, die wenigstens bei anstehendem Schlupfsignal aktivierbar ist und in aktiviertem Zustand den Stromkreis des Betätigungsorgans (21) auftrennt.

5. Betätigungseinrichtung nach Anspruch 4, dadurch gekennzeichnet, daß die Schalteinrichtung (22) als Relais mit Ruhestromkontakt ausgebildet ist.

6. Betätigungseinrichtung nach einem der Ansprüche 3 bis 5, dadurch gekennzeichnet, daß die dritte Einrichtung (5, 7) eine Schalteinrichtung (7) aufweist, welche den Erregerkreis des Magneten des Wegeventils (3) bzw. den Steuerkreis der Schalteinrichtung (22) auftrennt, wenn die Differentialsperre eingerückt ist.

7. Betätigungseinrichtung nach Anspruch 6, dadurch gekennzeichnet, daß die dritte Einrichtung (5, 7) zur Steuerung der Schalteinrichtung (7) einen Meßfühler (5) aufweist, der die Schalteinrichtung (7) aktiviert, wenn die Stelleinrichtung (4) ihre Einrückstellung erreicht.

8. Betätigungseinrichtung nach Anspruch 7, dadurch gekennzeichnet, daß die Schalteinrichtung (7) als Relais mit Ruhestromkontakt ausgebildet ist, dessen Stromkreis von dem Meßfühler (5) geschlossen wird, wenn die Stelleinrichtung (4) ihre Einrückstellung erreicht.

9. Betätigungseinrichtung nach den Ansprüchen 2 und 4 oder 2 und 5, dadurch gekennzeichnet, daß die dritte Einrichtung als Stellungssensor (30) ausgebildet ist, der die Einrückstellung der Stelleinrichtung (4) überwacht und die zweite Einrichtung (22) außer Funktion setzt, wenn die Stelleinrichtung (4) in Einrückstellung ist.

10. Betätigungseinrichtung nach einem der vorhergehenden Ansprüche, dadurch gekennzeichnet, daß die erste Einrichtung (9) als Bestandteil einer Antriebsschlupf-Regeleinrichtung ausgebildet ist.

11. Betätigungseinrichtung nach einem der vorhergehenden Ansprüche, dadurch gekennzeichnet, daß die elektrische Betätigung des Betätigungsorgans und/oder die zweite Einrichtung und/oder die dritte Einrichtung aus diskret oder teilweise oder vollständig integriert angeordneten elektronischen Logik- bzw. Schaltelementen bestehen, die vollständig oder teilweise mit der Antriebsschlupf-Regeleinrichtung und/oder anderen elektrischen/elektronischen Komponenten am Fahrzeug elektrisch und/oder baulich vereinigt sind.

12. Betätigungseinrichtung nach einem der vorhergehenden Ansprüche, dadurch gekennzeichnet, daß das Betätigungsorgan derart ausgebildet ist, daß es auch die Verbindung der Stelleinrichtung in Löserichtung der Differentialsperre mit einer oder der Druckmittelquelle (1) steuert.

## Claims

1. An actuating device for a differential lock, by means of which at least two inherently independently rotatable driven wheels of a vehicle can be connected so that they rotate together, with a control device (4) which can be loaded by pressure medium at least in the engagement direction of the differential lock and with a manually controllable actuating element (2, 21) controlling the connection of the control device in the engagement direction with a pressure medium source (1), characterized by the features:

a) a first device (9) monitoring the slip of at least one of the driven wheels is provided, which emits a slip signal whenever at least the one wheel slips;

b) a second device (3, 22) is provided, by means of which the connection of the control device (4) in the engagement direction with the pressure medium source (1) can be blocked when a slip signal is present.

2. An actuating device according to claim 1, characterized in that a third device (5, 7; 30) is provided, which puts the blocking function of the second device (3, 22) out of operation independently of the slip signal whenever the differential lock is engaged.

3. An actuating device according to one of patent claims 1 or 2, characterized in that the second device (3) is constructed as a magnetically operated directional control valve (3) arranged in the pressure medium line in series with the actuating element (2), the magnet of which valve can be activated when a slip signal is present.

4. An actuating device according to one of claims 1 or 2, wherein the actuating element (21) can be electrically actuated through a circuit, characterized in that the second device (22) is constructed as an electrically controlled switch device (22) which can be actuated at least when the slip signal is present and in the actuated state interrupts the circuit of the actuating element (21).

5. An actuating device according to claim 4, characterized in that the switch device (22) is constructed as a relay with a normally closed contact.

6. An actuating device according to one of claims 3 to 5, characterized in that the third device (5, 7) has a switch device (7) which interrupts the exciter circuit of the magnet of the directional control valve (3) or of the control circuit of the switch device (22) when the differential lock is engaged.

7. An actuating device according to claim 6, characterized in that the third device (5, 7) has a sensor (5) for controlling the switch device (7), which sensor activates the switch device (7) whenever the control device (4) reaches its engaged position.

8. An actuating device according to claim 7, characterized in that the switch device (7) is constructed as a relay with a normally closed contact, the circuit of which is closed by the sensor (5) whenever the control device (4) reaches its engaged position.

9. An actuating device according to one of claims 2 and 4 or 2 and 5, characterized in that the third device is constructed as a position sensor (30) which monitors the engagement position of the control device (4) and puts the second device (22) out of operation whenever the control device (4) is in the engaged position.

10. An actuating device according to one of the preceding claims, characterized in that the first device (9) is constructed as a component part of a drive slip controlling system.

11. An actuating device according to one of the preceding claims, characterized in that the electrical actuation of the actuating element and/or the second device and/or the third device comprise discrete or partially or fully integrated electronic logic or circuit elements which are electrically and/or structurally completely or partially combined with the drive slip controlling system and/or other electric/electronic components on the vehicle.

12. An actuating device according to one of the preceding claims, characterized in that the actuating element is constructed in such a manner that it also controls the connection of the control device in the inactivating direction of the differential lock with a or the pressure medium source (1).

## Revendications

1. Commande pour un dispositif appelé blocage de différentiel, permettant de solidariser en rotation au moins deux roues motrices d'un véhicule pouvant normalement tourner indépendamment l'une de l'autre, comprenant une servocommande (4) à laquelle est applicable une pression de fluide, au moins dans le sens de l'engagement du blocage de différentiel, et un organe de commande (2, 21) manœuvrable à volonté et contrôlant la liaison de la servocommande à une source de fluide de pression (1), liaison qui agit dans le sens de l'engagement du blocage de différentiel, caracatérisée en ce que:

a) elle comporte un premier dispositif (9) surveillant le patinage ou le glissement d'au moins l'une des roues motrices et délivrant un signal de glissement lorsque la roue patine;

b) elle comporte un deuxième dispositif (3, 22) pour couper la liaison entre la servocommande (4) et la source de fluide de pression (1) en cas d'application du signal de glissement.

2. Commande selon la revendication 1, caractérisée en ce qu'elle comporte un troisième dispositif (5, 7; 30) qui met hors service, indépendamment du signal de glissement, la fonction d'invalidation du deuxième dispositif (3, 22) lorsque le blocage de différentiel est engagé.

3. Commande selon la revendication 1 ou 2, caractérisée en ce que le deuxième dispositif (3) est réalisé comme un distributeur (3) à commande électromagnétique, qui est monté en série avec l'organe de commande (2) côté fluide de pression et dont l'électroaimant peut être excité lorsque le signal de glissement est appliqué.

4. Commande selon la revendication 1 ou 2, dans laquelle l'organe de commande (21) est manœuvrable électriquement par un circuit électrique, caractérisée en ce que le deuxième dispositif (22) est réalisé comme un dispositif de commutation (22) à commande électrique, qui peut être excité, au moins, lorsque le signal de glissement est appliqué et qui, lorsqu'il est excité, coupe le circuit électrique de l'organe de commande (21).

5. Commande selon la revendication 4, caractérisée en ce que le dispositif de commutation (22) est constitué par un relais avec un contact de repos.

6. Commande selon l'une des revendications 3 à 5, caractérisée en ce que le troisième dispositif (5, 7) présente un dispositif de commutation (7) qui, lorsque le blocage de différentiel est engagé, coupe le circuit d'excitation de l'électroaimant du distributeur (3) ou le circuit de commande du dispositif de commutation (22).

7. Commande selon la revendication 6, caractérisée en ce que le troisième dispositif (5, 7) présente, pour la commande du dispositif de commutation (7), un capteur (5) qui provoque l'excitation du dispositif de commutation (7) lorsque la servocommande (4) atteint sa position engagée.

8. Commande selon la revendication 7, caractérisée en ce que le dispositif de commutation (7) est constitué par un relais avec un contact de repos, dont le circuit électrique est fermé par le capteur (5) lorsque la servocommande (4) atteint sa position engagée.

9. Commande selon les revendications 2 et 4 ou 2 et 5, caractérisée en ce que le troisième dispositif est réalisé comme un détecteur de position (30) qui surveille la position engagée de la servocommande (4) et qui met hors service le deuxième dispositif (22) quand la servocommande (4) est en position engagée.

10. Commande selon l'une des revendications précédentes, caractérisée en ce que le premier dispositif (9) est réalisé comme une partie d'un dispositif de réglage sensible au patinage à l'entraînement.

11. Commande selon l'une des revendications précédentes, caractérisée en ce que la manœuvre électrique de l'organe de commande et/ou du deuxième dispositif et/ou du troisième dispositif est réalisée par des éléments électroniques logiques ou de commutation, sous forme de composants discrets ou de circuits partiellement ou complètement intégrés, lesquels sont réunis électriquement et/ou par la construction, complètement ou en partie, avec le dispositif de réglage sensible au patinage à l'entraînement et/ou avec d'autres composants électriques/électroniques du véhicule.

12. Commande selon l'une des revendications précédentes, caractérisée en ce que l'organe de commande est réalisé de manière qu'il contrôle également la liaison entre une source de fluide de pression ou la source de fluide de pression (1) et la servocommande dans le sens du dégagement du blocage de différentiel.

Fig.1

Fig.2

Fig. 3